# EUROPÄISCHE PATENTSCHRIFT

(11) **EP 1 674 679 B1**
(45) Veröffentlichungstag und Bekanntmachung des Hinweises auf die Patenterteilung: **17.02.2016**
(21) Anmeldenummer: 05109490.2
(22) Anmeldetag: 12.10.2005
(51) Int. Cl.: F01M 13/00, F02M 25/06, F16L 33/22, F16L 37/113, F02M 35/10

(54) **Brennkraftmaschine mit Frischluftanlage und Entlüftungseinrichtung**
Combustion engine with fresh air and ventilating system
Moteur à combustion avec dispositif d'air frais et de ventilation

(30) Priorität: 23.12.2004 DE 102004063459
(43) Veröffentlichungstag der Anmeldung: 28.06.2006
(73) Patentinhaber: MAHLE Filtersysteme GmbH, 70376 Stuttgart (DE)
(72) Erfinder: BAUMANN, Andreas, 72622, Nürtingen (DE); REINERS, Frank, 71332, Waiblingen (DE); PAULINI, Uwe, 73730 Esslingen (DE); STEHLIG, Juergen, 72666, Neckartailfingen (DE)
(74) Vertreter: BRP Renaud & Partner mbB Rechtsanwälte Patentanwälte Steuerberater

(56) Entgegenhaltungen:
- EP-A- 1 306 542
- DE-A1- 3 918 785
- DE-A1- 3 932 300
- DE-U1- 29 818 787
- FR-A1- 2 738 035
- GB-A- 2 263 956
- ANONYMOUS: "Freeze resistant intake manifold fitting for PCV systems" RESEARCH DISCLOSURE, MASON PUBLICATIONS, HAMPSHIRE, GB, Bd. 399, Nr. 36, Juli 1997 (1997-07), XP007121886 ISSN: 0374-4353

## Beschreibung

Die vorliegende Erfindung betrifft eine Brennkraftmaschine, insbesondere für ein Kraftfahrzeug, mit den Merkmalen des Oberbegriffs des Anspruchs 1. Die Erfindung betrifft außerdem eine Frischluftanlage sowie eine Entlüftungseinrichtung für eine derartige Brennkraftmaschine.

Eine gattungsgemäße Brennkraftmaschine ist aus der FR 2 738 035 A1 bekannt. Sie umfasst eine Frischluftanlage zur Versorgung der Brennkraftmaschine mit Frischluft sowie eine Entlüftungseinrichtung zum Abführen von Blow-By-Gasen aus der Brennkraftmaschine. Hierzu ist ein Schlauch der Entlüftungseinrichtung über einen Stutzen an eine Leitung der Frischluftanlage angeschlossen, um Blow-By-Gase der Frischluft zuzuführen.

Aus der EP 1 306 542 A1 ist eine luftführende Verbindung mit einer Buchse und einem darin eingesteckten Stutzen bekannt, wobei die Buchse an einem Austrittsabschnitt wenigstens eine Seitenöffnung mit umfangsmäßig geschlossenem Rand aufweist, während der Stutzen an einem Eintrittsabschnitt wenigstens einen seitlich abstehenden Widerhaken aufweist, der in die wenigstens eine Seitenöffnung eingreift, wenn die Buchse mit ihrem Austrittsabschnitt auf den Eintrittsabschnitt des Stutzens aufgesteckt ist. Der jeweilige Widerhaken weist in der Umfangsrichtung auf beiden Seiten jeweils eine senkrecht zur Umfangsrichtung verlaufende ebene Flanke auf.

Eine moderne Brennkraftmaschine, insbesondere für Kraftfahrzeuge, ist mit einer Frischluftanlage zur Versorgung der Brennkraftmaschine mit Frischluft sowie mit einer Entlüftungseinrichtung zum Abführen von Blow-By-Gasen aus der Brennkraftmaschine ausgestattet.

Im Betrieb einer Kolben-Brennkraftmaschine gelangen Blow-By-Gase aufgrund unvermeidlicher Leckagen zwischen Kolben und Zylinder in ein Kurbelgehäuse der Brennkraftmaschine. Damit im Kurbelgehäuse kein unzulässig hoher Druck entsteht, werden die Blow-By-Gase mit Hilfe der Entlüftungseinrichtung abgeführt. Um dabei eine Umweltverschmutzung durch die schadstoffbeladenen Blow-By-Gase zu vermeiden, werden die Blow-By-Gase mit Hilfe der Entlüftungseinrichtung zweckmäßig der Frischluftanlage zugeführt, das heißt, die Blow-By-Gase werden erneut der Verbrennung der Brennkraftmaschine zugeführt. Zu diesem Zweck ist ein Schlauch der Entlüftungseinrichtung über einen Stutzen an eine Leitung der Frischluftanlage angeschlossen.

Für die Montage der Brennkraftmaschine muss besagter Schlauch an den Stutzen der Leitung angeschlossen werden. Dieser Anschlussvorgang soll einhändig durchführbar sein, um Montagezeit zu sparen. Darüber hinaus muss der Schlauch wieder vom Stutzen zerstörungsfrei entfernt werden können, beispielsweise um Reparaturen durchführen zu können.

Es ist ein Connector bekannt, der einerseits einen Schlauchanschluss und andererseits einen Stutzenanschluss aufweist. Der Schlauchanschluss ist widerhakenartig gestuft und weist eine umlaufende Ringnut auf, in der ein Dichtring angeordnet ist. Auf diesen Schlauchanschluss kann ein Austrittsabschnitt des Schlauchs aufgesteckt werden, um diesen fest und bleibend mit dem Connector zu verbinden. Hierzu wird der Austrittabschnitts des Schlauchs auf den Schlauchanschluss des Connectors "aufgeschossen", das bedeutet, dass der Schlauch zumindest in seinem Austrittsabschnitt erwärmt und anschließend auf den Schlauchanschluss angesteckt wird, wobei sich der Austrittsabschnitt aufgrund der erhöhten Temperatur leicht elastisch aufweiten lässt. Beim anschließenden Abkühlen schrumpft der Austrittsabschnitt stark zusammen und verhärtet sich, wodurch quasi eine Formschlussverbindung über die Stufen des Schlauchanschlusses realisiert wird. Die Verbindung zwischen Schlauch und Connector besitzt eine hohe Auszugsfestigkeit und ist nicht für ein lösbares Entfernen des Schlauchs vom Connector vorgesehen.

Im Unterschied dazu ist der Stutzenanschluss des Connectors mit einer lösbaren Verrastung versehen, die beim Aufstecken des Stutzenanschlusses auf den Stutzen am Stutzen selbsttätig einrastet. Zum Lösen dieser Steckverbindung wird die Verrastung auf geeignete Weise gelöst, so dass der Stutzenanschluss zerstörungsfrei vom Stutzen abgezogen werden kann. Im Stutzenanschluss sind weitere Dichtringe angeordnet, die im montierten Zustand mit dem eingesteckten Stutzen zusammenwirken.

Mit Hilfe des bekannten Connectors kann der Schlauch der Entlüftungseinrichtung einfach über den Stutzen an die Leitung der Frischluftanlage angeschlossen werden. Auch die Demontage ist einfach und zerstörungsfrei realisierbar. Nachteilig ist jedoch, dass ein derartiger Connector relativ teuer ist.

Die vorliegende Erfindung beschäftigt sich mit dem Problem, für das Anschließen des Schlauchs der Entlüftungseinrichtung über den Stutzen an die Leitung der Frischluftanlage einen preiswerten Weg aufzuzeigen.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Schlauch mit seinem Austrittsabschnitt direkt auf den Eintrittsabschnitt des Stutzens aufzustecken und zur Sicherung wenigstens eine fensterartige Seitenöffnung im Austrittsabschnitt vorzusehen, in welche ein am Eintrittsabschnitt ausgebildeter Widerhaken eingreift. Auf einen Connector, der quasi einen fest mit dem Schlauch verbundenen und lösbar auf den Stutzen aufsteckbaren Adapter bildet, kann somit verzichtet werden. Des Weiteren lassen sich Seitenöffnungen im Austrittsabschnitt des Schlauchs preiswert herstellen. Ebenso können Widerhaken am Eintrittsabschnitt des Stutzens preiswert ausgebildet werden. Der sich durch die Erfindung ergebende Preisvorteil liegt auf der Hand.

Ferner ist erfindungsgemäß vorgesehen, dass der Schlauch an einem Austrittsabschnitt wenigstens eine Seitenöffnung mit umfangsmäßig geschlossenem Rand aufweist, wobei der Stutzen an einem Eintrittsabschnitt wenigstens einen seitlich abstehenden Widerhaken aufweist, der in die wenigstens eine Seitenöffnung eingreift, wenn der Schlauch mit seinem Austrittsabschnitt auf den Eintrittsabschnitt des Stutzens aufgesteckt ist, wobei der jeweilige Widerhaken in der Umfangsrichtung des Eintrittsabschnitts und/oder des Austrittsabschnitts kleiner dimensioniert ist als die jeweilige Seitenöffnung und wobei der jeweilige Widerhaken in der Umfangsrichtung zumindest an einer Seite eine das Unterfahren und radiale Verdrängen des Austrittsabschnitts im Randbereich der jeweiligen Seitenöffnung vereinfachende Rampe aufweist.

Zweckmäßig ist der Schlauch zumindest in seinem Austrittsabschnitt, beispielsweise durch Formgebung und/oder Materialauswahl, so ausgestaltet, dass er sich beim Aufstecken auf den Eintrittsabschnitt des Stutzens reversibel verformt. Durch diese Bauweise werden zum einen Beschädigungen des Schlauchs beim Aufstecken auf den Stutzen vermieden, zum anderen wird dadurch eine beschädigungsfreie Entfernung des Schlauchs vom Stutzen vereinfacht.

Gemäß einer vorteilhaften Ausführungsform kann die wenigstens eine Seitenöffnung in der Umfangsrichtung des Austrittsabschnitts als Langloch ausgestaltet sein, das sich vorzugsweise über 30° bis 45° erstrecken kann. Durch die Ausführung der wenigstens einen Seitenöffnung als Langloch, lässt sich der Schlauch in unterschiedlichen Drehlagen am Stutzen montieren, sofern dann der wenigstens eine Widerhaken in Umfangsrichtung entsprechend kleiner dimensioniert ist als die jeweilige Seitenöffnung. Diese Maßnahme vereinfacht die Montage, da herstellungsbedingte Toleranzen ausgeglichen werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine stark vereinfachte, schaltplanartige Prinzipdarstellung einer Brennkraftmaschine nach der Erfindung,
- Fig. 2: einen vereinfachten Längsschnitt im Bereich eines Stutzens einer Frischluftanlage nach der Erfindung,
- Fig. 3: einen vereinfachten Längsschnitt im Bereich eines Schlauchs einer Entlüftungseinrichtung nach der Erfindung,
- Fig. 4: einen Längsschnitt wie in den Fig. 2 und 3, jedoch bei auf den Stutzen aufgestecktem Schlauch.

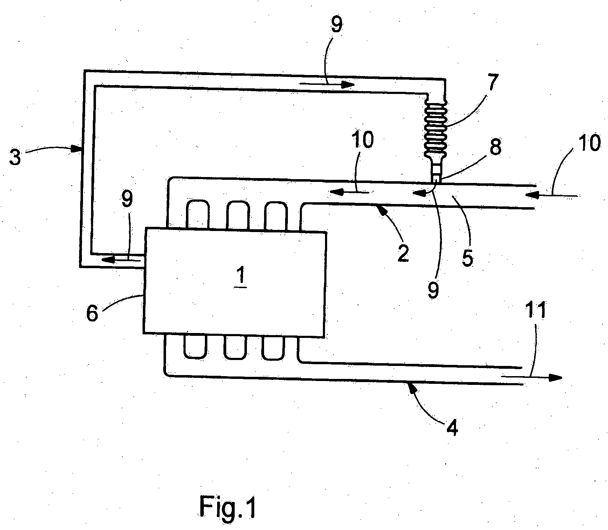

Entsprechend Fig. 1 ist eine erfindungsgemäße Brennkraftmaschine 1, insbesondere für ein Kraftfahrzeug, mit einer Frischluftanlage 2, mit einer Entlüftungseinrichtung 3 und zweckmäßig mit einer Abgasanlage 4 ausgestattet. Die Frischluftanlage 2 dient zur Versorgung der Brennkraftmaschine 1 mit Frischluft und umfasst zumindest eine Leitung 5. Die Frischluftanlage 2 kann dabei in üblicher Weise weitere, hier nicht gezeigte Komponenten, wie z.B. eine Frischluftfilter, enthalten.

Die Entlüftungseinrichtung 3 dient zum Abführen von Blow-By-Gasen aus der Brennkraftmaschine 1. Die Entlüftungseinrichtung 3 ist dazu einenends an einen Motorblock 6 der Brennkraftmaschine 1 angeschlossen und kommuniziert dort mit einem Kurbelgehäuse. Anderenends weist die Entlüftungseinrichtung 3 einen Schlauch 7 auf, der über einen Stutzen 8 an die Leitung 5 angeschlossen ist. Die durch Pfeile symbolisierten Blow-By-Gase 9 können auf diese Weise der ebenfalls durch Pfeile symbolisierten Frischluft 10 zugeführt werden. Die Entlüftungseinrichtung 3 kann in üblicher Weise weitere, hier nicht gezeigte Komponenten, wie z. B. ein Tröpfchenabscheider, aufweisen.

Die Abgasanlage 4 dient zum Abführen von durch einen Pfeil angedeuteten Verbrennungsabgasen 11 aus der Brennkraftmaschine 1. Auch die Abgasanlage 4 kann weitere, hier nicht dargestellte Komponenten, wie z.B. Schalldämpfer, Katalysator, Partikelfilter, aufweisen.

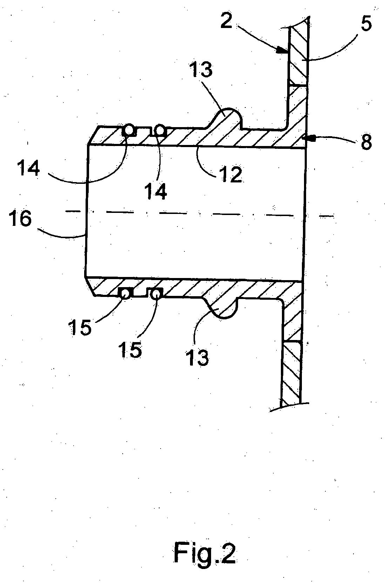

Entsprechend Fig. 2 ist die Leitung 5 der Frischluftanlage 2 mit dem Stutzen 8 ausgestattet. Der Stutzen 8 kann - wie hier - an die Leitung 5 angespritzt sein. Der Stutzen 8 besteht dabei aus einem geeigneten Kunststoff. Zweckmäßig besteht auch die Leitung 5 aus einem Kunststoff. Ebenso ist es möglich, den Stutzen 8 integral an der Leitung 5 auszuformen, das heißt, Stutzen 8 und Leitung 5 werden gleichzeitig in einem Werkzeug ausgeformt, z.B. spritzgeformt.

Des Weiteren können im Bereich des Stutzens 8 diverse Vorkehrungen getroffen werden, um eine Eisbildung im Mündungsbereich zwischen Stutzen 8 und Leitung 5 zu vermeiden. Beispielsweise kann eine hierzu geeignete Heizeinrichtung vorgesehen sein, die hier jedoch nicht dargestellt ist.

Der Stutzen 8 kann auch ein separat hergestelltes Bauteil sein, das auf eine beliebige, geeignete Weise an der Leitung 5 angebracht sein kann.

Der Stutzen 8 weist einen Eintrittsabschnitt 12 auf, der zylindrisch oder hülsenförmig gestaltet ist. An diesem Eintrittsabschnitt 12 weist der Stutzen 8 zumindest einen seitlich abstehenden Widerhaken 13 auf. Im gezeigten Beispiel sind zwei derartige Widerhaken 13 vorgesehen, die diametral gegenüberliegend angeordnet sind. Die Anzahl der Widerhaken 13 ist dabei grundsätzlich beliebig.

Des Weiteren ist der Stutzen 8 an seinem Eintrittsabschnitt 12 mit wenigstens einer Ringnut 14 ausgestattet. Im gezeigten Beispiel sind exemplarisch zwei derartige Ringnuten 14 vorgesehen, die jeweils außen am Eintrittsabschnitt 12 geschlossen umlaufen. In diesen Ringnuten 14 ist jeweils ein Dichtring 15 eingesetzt, vorzugsweise ein O-Ring. Die Ringnuten 14 und somit die Dichtringe 15 sind dabei zwischen den Widerhaken 13 und einem Eintrittsende 16 des Eintrittsabschnitts 12 bzw. des Stutzens 8 positioniert. Um den Schlauch 7 besser auf den Stutzen 8 aufsetzen zu können, ist der Stutzen 8 hier an seinem Eintrittsende 16 außerdem angefast.

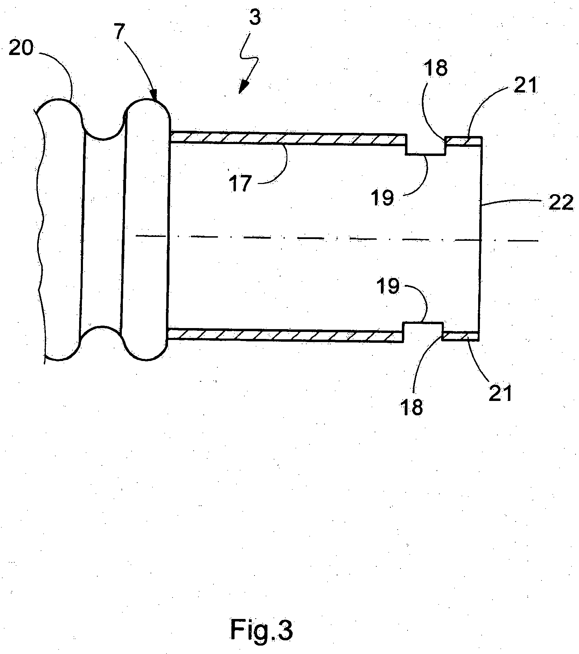

Entsprechend Fig. 3 weist der Schlauch 7 einen Austrittsabschnitt 17 auf, der zweckmäßig zylindrisch geformt ist. Erfindungsgemäß weist der Schlauch 7 an seinem Austrittsabschnitt 17 zumindest eine Seitenöffnung 18 auf. Im vorliegenden Beispiel sind exemplarisch zwei derartige Seitenöffnungen 18 vorgesehen, die einander diametral gegenüberliegen. Zweckmäßig stimmt die Anzahl und Anordnung der Widerhaken 13 mit der Anzahl und Anordnung der Seitenöffnungen 18 überein. Die Seitenöffnungen 18 charakterisieren sich durch einen umfangsmäßig geschlossenen Rand 19, das heißt, die Seitenöffnungen 18 sind jeweils vollständig vom Werkstoff des Austrittsabschnitts 17 umschlossen.

Gemäß der hier gezeigten, bevorzugten Ausführungsform sind die Seitenöffnungen 18 so dimensioniert, dass sie in der Umfangsrichtung des Austrittsabschnitts 17 jeweils ein Langloch bilden. Dementsprechend sind die Seitenöffnungen 18 in der Umfangsrichtung des Austrittsabschnitts 17 größer dimensioniert als in der Achsrichtung des Umfangsabschnitts 17. Vorzugsweise erstrecken sich die Seitenöffnungen 18 in der Umfangsrichtung des Austrittsabschnitts 17 jeweils in einem Bereich von etwa 30° bis 45°.

Der Schlauch 7 kann wie bei der hier gezeigten Ausführungsform anschließend an seinen Austrittsabschnitt 17 einen Abschnitt 20 aufweisen, der als Wellschlauch ausgestaltet sein kann und dadurch eine gewisse Flexibilität aufweist.

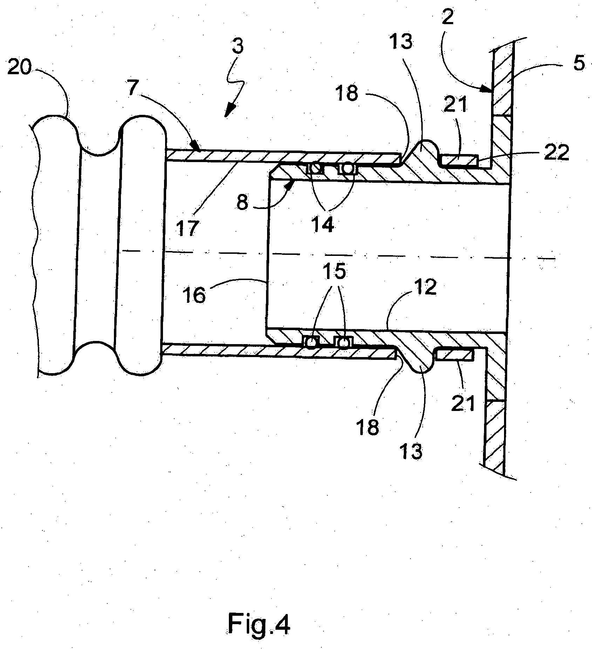

Entsprechend Fig. 4 kann der Schlauch 7 dadurch an die Leitung 5 angeschlossen werden, dass der Austrittsabschnitt 17 des Schlauchs 7 auf den Eintrittsabschnitt 12 des Stutzens 8 aufgesteckt wird, derart, dass jeder Widerhaken 13 in die zugehörige Seitenöffnung 18 eingreift, Der Schlauch 7 ist dadurch am Stutzen 8 gesichert. Eine gasdichte Verbindung zwischen Schlauch 7 und Stutzen 8 wird über die Dichtungen 15 gewährleistet. Der Schlauch 7 ist wie der Stutzen 8 zweckmäßig aus Kunststoff hergestellt. Die Gestaltung des Schlauchs 7, zumindest im Austrittsabschnitt 17, erfolgt vorzugsweise so, dass sich der Austrittsabschnitt 17 beim Aufstecken auf den Eintrittsabschnitt 8 nur reversibel verformt, so dass die Widerhaken 13 in den Seitenöffnungen 18 jeweils einen Randabschnitt 21 effektiv hintergreifen, der sich von der jeweiligen Seitenöffnung 18 bis zum Austrittsende 22 des Schlauchs 7 erstreckt.

Diese reversible Verformbarkeit des Austrittsabschnitts 17 kann durch eine geeignete Dimensionierung des Austrittsabschnitts 17 realisiert werden. Die Wandstärke des Austrittsabschnitts 17 kann dementsprechend geringer sein als diejenige des Eintrittsabschnitts 12. Zusätzlich oder alternativ kann die Verformbarkeit des Austrittsabschnitts 17 auch durch eine geeignete Materialauswahl erreicht oder zumindest unterstützt werden. Vorzugsweise ist somit der Kunststoff des Schlauchs 7 bzw. des Austrittsabschnitts 17 weicher als der Kunststoff des Stutzens 8. In der Folge kann der Austrittsabschnitt 17 beim Aufstecken nachgeben und sich ausweiten, während der steifere Stutzen 8 im wesentlichen formstabil bleibt.

Die Formgebung der Widerhaken 13 ist zweckmäßig so gewählt, dass sie beim Aufstecken das Aufweiten des Austrittsabschnitts 17 zumindest im Randbereich 21 erleichtern. Die Widerhaken 13 bilden somit in der Aufsteckrichtung eine geneigte Rampe. Im Unterschied dazu sind die Widerhaken 13 außerdem so geformt, dass sie das Abziehen des Schlauchs 7 vom Stutzen 8 erschweren oder verhindern. Beim gezeigten Beispiel bilden die Widerhaken 13 in der Auszugsrichtung eine Stufe, die im wesentlichen radial absteht. Der Eingriff in die Seitenöffnung 18 wird dadurch hinsichtlich des erzielten Formschlusses besonders effektiv.

Vorzugsweise sind die Widerhaken 13 in der Umfangsrichtung des Eintrittsabschnitts 12 bzw. des Austrittsabschnitts 17 kleiner dimensioniert als die Seitenöffnungen 18. Hierdurch kann die Drehlage zwischen Austrittsabschnitt 17 und Eintrittsabschnitt 12 verändert werden, da die Widerhaken 13 in der Umfangsrichtung innerhalb der Seitenöffnungen 18 verstellbar sind. Durch diese Bauweise ist das Anschließen des Schlauchs 7 an die Leitung 5 erheblich vereinfacht, da toleranzbedingte Abweichungen zwischen der Drehlage des Austrittsabschnitts 17 relativ zum Eintrittsabschnitt 12 durch die Dimensionierung der langlochartigen Seitenöffnungen 18 ausgeglichen werden können.

Zum Demontieren des Schlauchs 7 kann dieser zweckmäßig in der Umfangsrichtung gedreht werden, derart, dass die Widerhaken 13 den die Seitenöffnungen 18 in Umfangsrichtung begrenzenden Randbereich radial nach außen verdrängen. Sobald die Widerhaken 13 aus den Seitenöffnungen 18 herausgedreht sind, kann der Schlauch 7 vom Stutzen 8 abgezogen werden. Um das Ausdrehen der Widerhaken 13 aus den Seitenöffnungen 18 zu erleichtern, können die Widerhaken 13 in der Umfangsrichtung zumindest an einer Seite, z. B. im Uhrzeigersinn und/oder im Gegenuhrzeigersinn, ebenfalls eine Rampe aufweisen, die das Unterfahren und radiale Verdrängen des Austrittsabschnitts 17 im jeweiligen Randbereich der Seitenöffnungen 18 vereinfachen.

## Patentansprüche

1. Brennkraftmaschine, insbesondere für ein Kraftfahrzeug,
- mit einer Frischluftanlage (2) zur Versorgung der Brennkraftmaschine (1) mit Frischluft (10),
- mit einer Entlüftungseinrichtung (3) zum Abführen von Blow-By-Gasen (9) aus der Brennkraftmaschine (1),
- wobei ein Schlauch (7) der Entlüftungseinrichtung (3) über einen Stutzen (8) an eine Leitung (5) der Frischluftanlage (2) angeschlossen ist, um Blow-By-Gase (9) der Frischluft (10) zuzuführen,
**dadurch gekennzeichnet,**
- **dass** der Schlauch (7) an einem Austrittsabschnitt (17) wenigstens eine Seitenöffnung (18) mit umfangsmäßig geschlossenem Rand (19) aufweist,
- **dass** der Stutzen (8) an einem Eintrittsabschnitt (12) wenigstens einen seitlich abstehenden Widerhaken (13) aufweist, der in die wenigstens eine Seitenöffnung (18) eingreift, wenn der Schlauch (7) mit seinem Austrittsabschnitt (17) auf den Eintrittsabschnitt (12) des Stutzens (8) aufgesteckt ist,
- **dass** der jeweilige Widerhaken (13) in der Umfangsrichtung des Eintrittsabschnitts (12) und/oder des Austrittsabschnitts (17) kleiner dimensioniert ist als die jeweilige Seitenöffnung (18),
- **dass** der jeweilige Widerhaken (13) in der Umfangsrichtung zumindest an einer Seite eine das Unterfahren und radiale Verdrängen des Austrittsabschnitts (17) im Randbereich der jeweiligen Seitenöffnung (18) vereinfachende Rampe aufweist.

2. Brennkraftmaschine nach Anspruch 1,
**dadurch gekennzeichnet,**
**dass** der Stutzen (8) am Eintrittsabschnitt (12) zwischen dem wenigstens einen Widerhaken (13) und einem Eintrittsende (16) des Stutzens (8) wenigstens eine umlaufende Ringnut (14) aufweist, in der ein Dichtring (15) angeordnet ist.

3. Brennkraftmaschine nach Anspruch 1 oder 2,
**dadurch gekennzeichnet,**
**dass** der Stutzen (8) an der Leitung (5) integral ausgeformt ist.

4. Brennkraftmaschine nach Anspruch 1 oder 2,
**dadurch gekennzeichnet,**
**dass** der Stutzen (8) an die Leitung (5) angespritzt ist.

5. Brennkraftmaschine nach einem der Ansprüche 1 bis 4, **dadurch gekennzeichnet,**
- **dass** der Stutzen (8) und der Schlauch (7) aus Kunststoff hergestellt sind,
- **dass** der Kunststoff des Stutzens (8) steifer ist als der Kunststoff des Schlauchs (7).

6. Brennkraftmaschine nach einem der Ansprüche 1 bis 5,
**dadurch gekennzeichnet,**
**dass** der Schlauch (7) zumindest in seinem Austrittsabschnitt (17) so ausgestaltet ist, dass er sich beim Aufstecken auf den Eintrittsabschnitt (12) des Stutzens (8) reversibel verformt.

7. Brennkraftmaschine nach einem der Ansprüche 1 bis 6,
**dadurch gekennzeichnet,**
**dass** die wenigstens eine Seitenöffnung (18) in der Umfangsrichtung des Austrittsabschnitts (17) als Langloch ausgestaltet ist.

8. Brennkraftmaschine nach einem der Ansprüche 1 bis 7,
**dadurch gekennzeichnet,**
**dass** sich die wenigstens eine Seitenöffnung (18) in der Umfangsrichtung des Austrittsabschnitts (17) etwa in einem Winkelbereich von 30° bis 45° erstreckt.

## Claims

1. An internal combustion engine, in particular for a motor vehicle,
- having a fresh air system (2) to supply the internal combustion engine (1) with fresh air (10),
- having a ventilation device (3) for conducting blow-by gases (9) out of the internal combustion engine (1),
- a hose (7) of the ventilation device (3) being connected via a connection piece (8) to a line (5) of the fresh air system (2) in order to supply blow-by gases (9) to the fresh air (10),
**characterised in that**
- the hose (7) has, on an outlet section (17), at least one side opening (18) having an edge (19) with a closed circumference,
- the connection piece (8) has, on an inlet section (12), at least one laterally projecting barb (13), which engages in the at least one side opening (18) when the hose (7) is placed with the outlet section (17) thereof onto the inlet section (12) of the connection piece (8),
- the respective barb (13) is smaller in the circumferential direction of the inlet section (12) and/or of the outlet section (17) than the respective side opening (18),
- the respective barb (13) has in the circumferential direction, at least on one side, a ramp, which makes it easier for the outlet section (17) to pass under and be radially displaced in the edge region of the respective side opening (18).

2. The internal combustion engine according to claim 1,
**characterised in that**
the connection piece (8) has, on the inlet section (12) between the at least one barb (13) and an inlet end (16) of the connection piece (8) at least one circumferential annular groove (14), in which a sealing ring (15) is arranged.

3. The internal combustion engine according to claim 1 or 2,
**characterised in that**
the connection piece (8) is formed integrally on the line (5).

4. The internal combustion engine according to claim 1 or 2,
**characterised in that**
the connection piece (8) is injection-moulded onto the line (5).

5. The internal combustion engine according to any one of claims 1 to 4,
**characterised in that**
- the connection piece (8) and the hose (7) are produced from plastic,
- the plastic of the connection piece (8) is more rigid than the plastic of the hose (7).

6. The internal combustion engine according to any one of claims 1 to 5,
**characterised in that**
the hose (7) is shaped, at least in the outlet section (17) thereof, such that it deforms reversibly when placed onto the inlet section (12) of the connection piece (8).

7. The internal combustion engine according to any one of claims 1 to 6,
**characterised in that**
the at least one side opening (18) is shaped as a slot in the circumferential direction of the outlet section (17).

8. The internal combustion engine according to any one of claims 1 to 7,
**characterised in that**
the at least one side opening (18) extends in the circumferential direction of the outlet section (17) in an angle range of approximately 30° to 45°.

## Revendications

1. Moteur à combustion interne, notamment pour un véhicule automobile,
- comportant une installation d'air frais (2) pour alimenter le moteur à combustion interne (1) en air frais (10),
- comportant un dispositif de purge d'air (3) pour évacuer des gaz de blow-by (9) hors du moteur à combustion interne (1),
- dans lequel un tuyau flexible (7) du dispositif de purge d'air (3) est raccordé par l'intermédiaire d'un embout (8) à une conduite (5) de l'installation d'air frais (2), afin d'alimenter des gaz de blow-by (9) dans l'air frais (10),
**caractérisé en ce que**
- le tuyau flexible (7) présente sur une portion de sortie (17) au moins une ouverture latérale (18) avec un bord (19) fermé sur sa circonférence,
- l'embout (8) présente sur une portion d'entrée (12) au moins une barbelure (13) dépassant latéralement, qui vient en prise dans au moins une ouverture latérale (18), quand le tuyau flexible (7) est enfoncé par sa portion de sortie (17) sur la portion d'entrée (12) de l'embout (8),
- la barbelure respective (13) est dimensionnée plus petite dans la direction circonférentielle de la portion d'entrée (12) et/ou de la portion de sortie (17) que l'ouverture latérale respective (18),
- la barbelure respective (13) présente dans la direction circonférentielle au moins sur un côté une rampe simplifiant le passage par-dessous et le refoulement radial de la portion de sortie (17) dans la zone de bord de l'ouverture latérale respective (18).

2. Moteur à combustion interne selon la revendication 1,
**caractérisé en ce que**
l'embout (8) présente sur la portion d'entrée (12) entre au moins une barbelure (13) et une extrémité d'entrée (16) de l'embout (8) au moins une rainure annulaire circonférentielle (14), dans laquelle une bague d'étanchéité (15) est disposée.

3. Moteur à combustion interne selon la revendication 1 ou 2,
**caractérisée en ce que**
l'embout (8) est façonné en un seul tenant sur la conduite (5).

4. Moteur à combustion interne selon la revendication 1 ou 2,
**caractérisé en ce que**
l'embout (8) est moulé par injection sur la conduite (5).

5. Moteur à combustion interne selon une des revendications 1 à 4,
**caractérisé en ce que**
- l'embout (8) et le tuyau flexible (7) sont fabriqués en plastique,
- le plastique de l'embout (8) est plus rigide que le plastique du tuyau flexible (7).

6. Moteur à combustion interne selon une des revendications 1 à 5,
**caractérisé en ce que**
le tuyau flexible (7) est conçu au moins dans sa portion de sortie (17) de telle sorte qu'il se déforme de manière réversible quand il est enfoncé sur la portion d'entrée (12) de l'embout (8).

7. Moteur à combustion interne selon une des revendications 1 à 6,
**caractérisé en ce qu'**
au moins une ouverture latérale (18) dans la direction circonférentielle de la portion de sortie (17) est conçue comme un alésage oblong.

8. Moteur à combustion interne selon une des revendications 1 à 7,
**caractérisé en ce qu'**
au moins une ouverture latérale (18) s'étend dans la direction circonférentielle de la portion de sortie (17) approximativement dans une plage angulaire de 30° à 45°.
